# FASCICULE DE BREVET EUROPEEN

(11) **EP 2 303 671 B1**
(45) Date de publication et mention de la délivrance du brevet: **04.01.2012**
(21) Numéro de dépôt: 09802564.6
(22) Date de dépôt: 05.06.2009
(51) Int. Cl.: B62D 25/04, B62D 25/08, B62D 21/15, B60J 5/04

(54) **ELEMENT DE RENFORT LATERAL DE L'AVANT D'UNE CAISSE DE VEHICULE AUTOMOBILE**
SEITENVERSTÄRKUNGSELEMENT FÜR DIE VORDERSEITE EINER AUTOMOBILKAROSSERIE
SIDE REINFORCEMENT MEMBER FOR THE FRONT OF AN AUTOMOBILE BODY

(30) Priorité: 28.07.2008 FR 0855176
(43) Date de publication de la demande: 06.04.2011
(73) Titulaire: Peugeot Citroën Automobiles SA, 78140 Vélizy-Villacoublay (FR)
(72) Inventeur: PERRON, Frédéric, 94600 CHOISY LE ROI, (FR); GROSSET, Romain, F-78220 Viroflay (FR); MASSIF, Kévin, F-78280 Guyancourt (FR)
(74) Mandataire: Fernandez, Francis Lionel
(86) Numéro de dépôt international: PCT/FR2009/051070
(87) Numéro de publication internationale: WO 2010/012916

(56) Documents cités:
- EP-A- 1 256 509
- EP-A- 1 514 713
- FR-A- 2 917 336
- JP-A- 2005 126 018

## Description

La présente invention est relative à une caisse de véhicule automobile.

Plus particulièrement, l'invention concerne une caisse avec un élément destiné à être fixé latéralement à l'avant de la caisse et pourvu d'un tronçon avant déformable qui est destiné à s'étendre selon la direction longitudinale du véhicule entre une extrémité avant de la caisse et un pied avant dont une face arrière détermine l'avant d'un encadrement de porte latérale du véhicule et qui peut se déformer longitudinalement par compression suite à un choc frontal du véhicule.

Le document JP2005-126018, qui montre le préambule de la revendication 1, décrit un exemple caisse dans laquelle l'élément de renfort avant est un caisson longitudinal disposé à l'avant du pied, dans le prolongement duquel le pied comporte un bloc interne de renfort également sous forme de caisson. A la hauteur de l'élément de renfort avant et du bloc de renfort interne, une partie arrière du pied porte un support de galets qui coopèrent à coulissement avec un rail longitudinal permettant le guidage à coulissement de la porte. L'élément de renfort et le bloc interne de renfort peuvent transmettre un effort vers l'arrière du véhicule par l'intermédiaire du support de galet et du rail qui forme un raidisseur de la porte.

Une telle caisse présente pour inconvénients d'être complexe et onéreuse. De plus, une telle caisse ne peut convenir que pour des véhicules à portes avant coulissantes.

Le document EP1514713 décrit une porte pourvue d'un doigt de blocage fixé du côté de l'extrémité avant du raidisseur, en regard d'un orifice. Le doigt a une forme essentiellement cylindrique, avec son extrémité avant effilée en forme d'ogive, et s'étend axialement en regard de l'orifice, essentiellement à l'intérieur du caisson défini par la porte. L'extrémité avant ou pointe du doigt fait saillie du volume intérieur du caisson, vers l'avant, au travers d'une fenêtre formée sur une face avant de la doublure.

Lorsque la porte est fermée et en l'absence de déformation du véhicule, la pointe du doigt s'étend au voisinage de l'orifice, sans pénétrer dans ce dernier.

Le doigt est susceptible de s'engager dans le volume intérieur du montant, formant logement avec l'orifice, au travers de ce dernier, lors d'une déformation en compression de la caisse et des éléments de carrosserie, à la suite d'un choc frontal subi par le véhicule.

La présente invention a notamment pour but de remédier aux inconvénients de l'état de la technique ci-dessus cité.

L'invention a pour objet une caisse de véhicule automobile comportant les caractéristiques de la revendication 1.

Des divers modes de réalisation de la caisse selon l'invention, sont décrits par les revendications dépendantes.

Par ailleurs, l'invention a également pour objet un véhicule automobile comportant une caisse d'aprés la revendication 7.

D'autres buts, caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue de côté de l'avant d'une caisse de véhicule automobile, avec une partie de la tôlerie d'une porte avant ;
- la figure 2 est une vue agrandie d'une partie de la caisse représentée à la figure 1 ;
- la figure 3 est une section selon la ligne III-III de la figure 1 ;
- la figure 4 est une vue en perspective d'un raidisseur de porte de la caisse de la figure 1.

Sur les différentes figures, les mêmes références désignent des éléments identiques ou similaires.

Dans la description qui va suivre, la direction désignée L est la direction longitudinale correspondant à l'axe d'avancement d'un véhicule, cet axe étant orienté de l'avant vers l'arrière du véhicule, la direction désignée T est transversale, la direction désignée V est verticale.

La caisse 10 d'un véhicule comporte traditionnellement une grande tôle latérale de structure appelée côté de caisse ou côté d'habitacle 12 qui détermine un encadrement de porte avant. L'encadrement est délimité par un pied avant 14, un montant de baie 16, un arc de pavillon 17, un pied milieu 18 et un longeron de soubassement 20. Une porte avant 22 est montée dans l'encadrement en ayant des charnières (non représentées) interposées entre le pied avant 14 et une partie avant de la porte.

Dans le mode de réalisation de la caisse 10 représenté sur les figures, du côté de l'intérieur du véhicule, le pied avant 14 est renforcé par un renfort vertical de pied avant 28 soudé dans le pied avant 14. Dans ce mode de réalisation, l'avant de la caisse 10 comporte une doublure d'aile avant 30 s'étendant tant latéralement à l'habitacle du véhicule qu'au compartiment moteur de ce dernier. Une partie arrière de la doublure d'aile avant 30 est soudée au pied avant 14 et au renfort de pied avant 28 du côté de l'intérieur du véhicule.

L'avant de la caisse 10 comporte du côté de l'extérieur du véhicule un élément de renfort latéral avant 40 soudé au pied avant 14 et à la doublure d'aile avant 30.

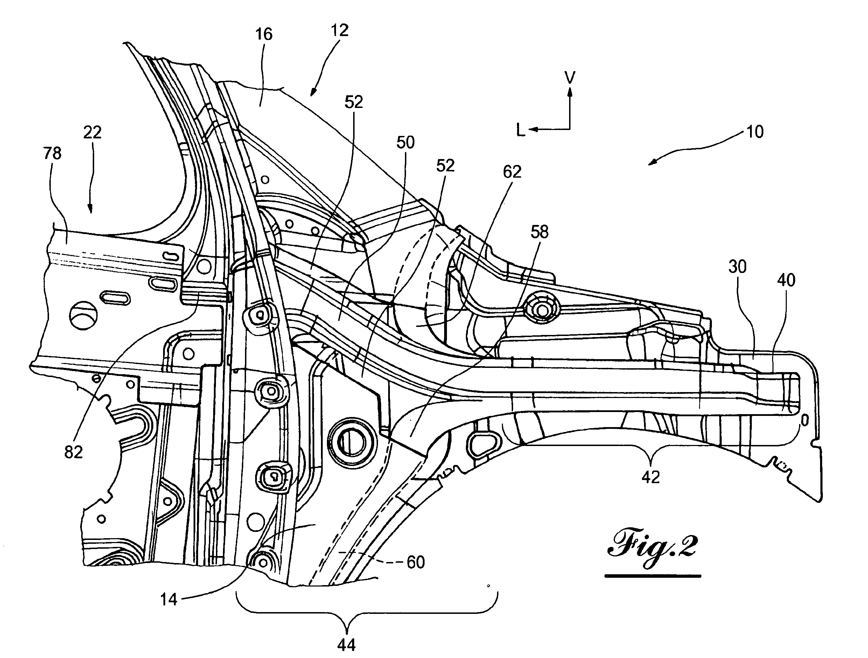

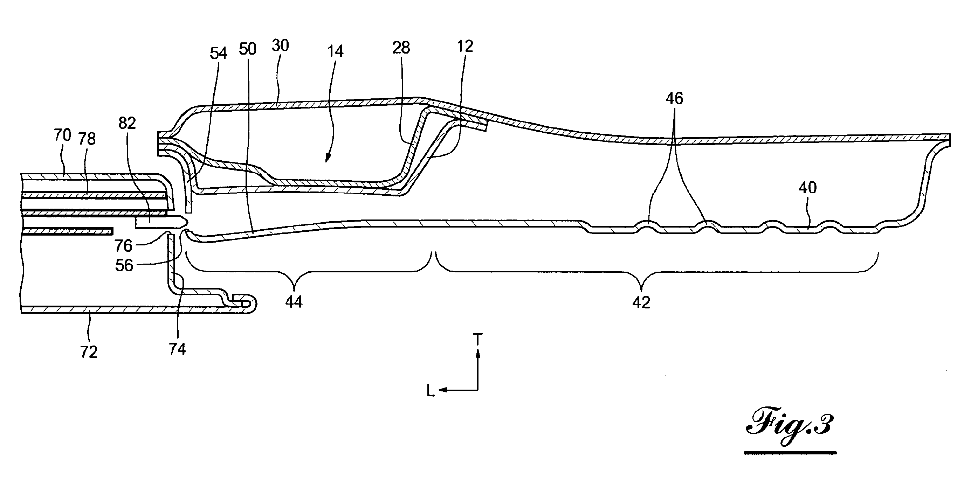

L'élément de renfort latéral avant 40 comporte un tronçon avant déformable 42 et un tronçon arrière 44 (figures 2 et 3) prolongeant le tronçon avant 42.

Le tronçon avant déformable 42 s'étend sensiblement horizontalement dans la direction longitudinale L du véhicule, entre le pied avant 14 et l'extrémité avant de la doublure d'aile avant 30. Le tronçon avant 42 peut, avec la doublure d'aile avant 30, se déformer longitudinalement par compression suite à un choc frontal du véhicule. A cet effet, le tronçon avant 42 présente une section sensiblement en U avec des branches sensiblement horizontales et comporte, espacés longitudinalement, des plis en creux 46 formant des zones adaptées à raccourcir par compression lorsque un effort est appliqué selon la direction longitudinale L.

Le tronçon arrière 44 a une forme de patte d'oie et comporte une branche principale 50 de section sensiblement en U dont la base est verticale et les extrémités libres ont chacune un rebord vertical 52 fixé au pied avant 14, du côté extérieur de celui-ci. La branche principale 50 prolonge le tronçon avant déformable 42 en étant inclinée vers le haut et vers l'arrière par rapport au tronçon avant déformable 42, par exemple d'environ 30 degrés comme dans le mode de réalisation représenté. L'extrémité arrière de la branche principale 50 est ainsi en hauteur par rapport au tronçon avant déformable 42.

L'extrémité arrière de la branche principale 50 comporte une paroi d'appui 54 (figure 3) raccordée au moins à la paroi latérale formant la base du U de la branche principale et s'étendant transversalement à la direction longitudinale L de l'élément de renfort avant 40, vers l'intérieur du véhicule. La paroi d'appui 54 s'étend transversalement au-delà du plan déterminé par les rebords verticaux 52, si bien qu'elle s'étend parallèlement à la face arrière du pied 14 à laquelle elle est par exemple fixée par soudage par points. La branche principale 50 est longitudinalement en regard d'une partie avant de la porte.

La paroi d'appui 54 est percée par une ouverture 56 sensiblement à mi hauteur de la branche principale 50. L'ouverture 56 est latéralement décalée vers l'extérieur par rapport au pied 14.

Outre la branche principale, le tronçon arrière 44 comporte un tronçon inférieur 58 qui est recourbé vers l'arrière et vers le bas à partir du raccordement du tronçon avant 42 et du tronçon arrière 44 de l'élément de renfort 40. Le tronçon inférieur 58 est apte à transmettre une partie de l'effort de compression déformant le tronçon avant 42 déformable vers le longeron de soubassement 20 du véhicule, via une partie inférieure 60 du pied avant 14.

Outre la branche principale, le tronçon arrière 44 comporte également un tronçon supérieur 62 qui est recourbé vers l'arrière et vers le haut à partir du raccordement du tronçon avant 42 et du tronçon arrière 44 de l'élément de renfort 40. Le tronçon supérieur 62 est apte à transmettre une partie de l'effort de compression déformant le tronçon avant déformable vers le montant de baie 16 du véhicule.

La forme en patte d'oie du tronçon arrière 44 permet avantageusement de transmettre à l'arrière du pied 14 la transmission de l'effort de compression résiduel non absorbé par la déformation du tronçon avant 42 résultant de l'effort appliqué à l'élément de renfort 40 lors d'un choc frontal. L'effort résiduel est transmis de façon répartie de façon majoritaire dans le longeron de soubassement 20, par exemple pour 60 pourcents, de façon moyenne dans la porte 20 par la branche principale 50, par exemple pour 30 pourcents, et de façon minoritaire dans le montant de baie 16, par exemple pour 10 pourcents. Le montant de baie 16 peut ainsi être dimensionné de façon à ne pas être trop épais et à ne pas gêner la visibilité vers l'avant.

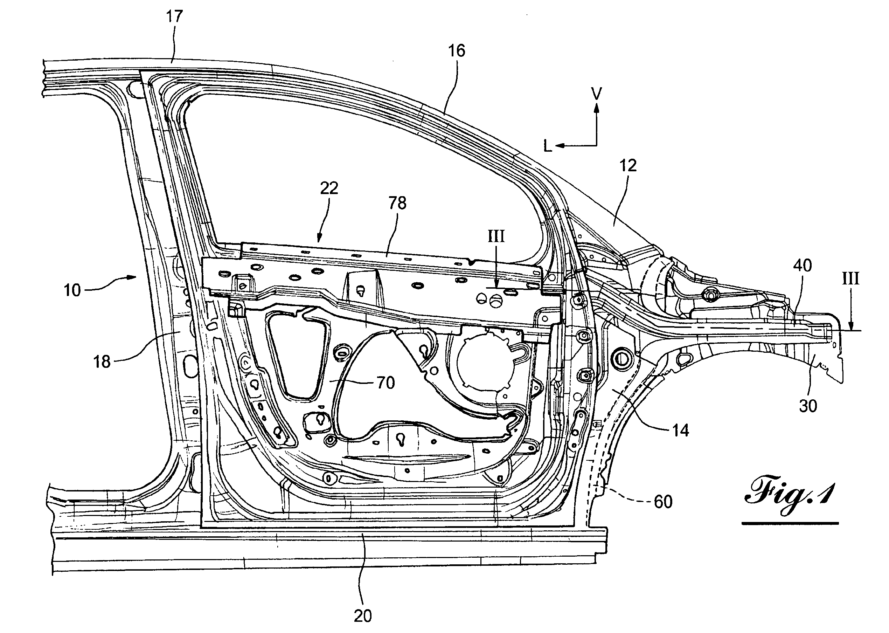

La porte 22 comporte une tôle concave de doublure de porte 70 (figures 1, 2 et 3) et un panneau extérieur 72 (figure 3) fermant la doublure vers l'extérieur du véhicule de façon à former un caisson de porte creux. A la partie avant de la porte, la doublure de porte comporte une paroi verticale transversale avant 74 s'étendant sensiblement perpendiculairement à la direction longitudinale du caisson, c'est-à-dire parallèlement à la paroi d'appui 54 de l'élément de renfort 40 et en regard de cette dernière quand la porte est fermée.

La paroi verticale transversale avant 74 comporte un perçage 76 disposé en regard de l'ouverture 56 de la paroi d'appui 54 de l'élément de renfort 40 quand la porte est fermée.

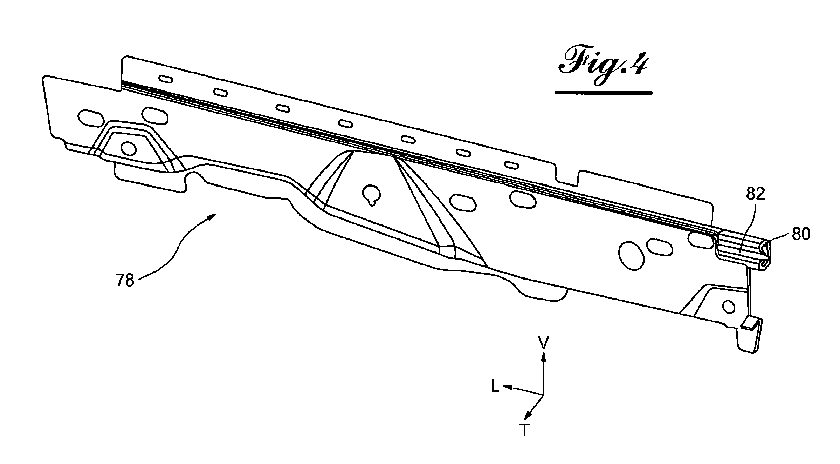

Dans le caisson, en partie supérieure de ce dernier, c'est à dire en partie inférieure d'un encadrement de fenêtre, la porte 22 comporte un raidisseur 78 (en traits forts sur la figure 3) s'étendant à la direction longitudinale du caisson, sur toute la longueur de la porte. Le raidisseur est formé par une plaque de tôle emboutie, comme représenté à la figure 4. L'extrémité avant du raidisseur 78 comporte un bossage supérieur 80, par exemple sous forme de plaque emboutie rapportée sur la tôle formant le raidisseur 78. Le bossage 80 et la portion correspondante du raidisseur 78 ont une section sensiblement en forme de B ou de 8 dont le creux central, côté extérieur du véhicule, reçoit fixement un pion cylindrique 82 s'étendant dans la direction longitudinale de la porte.

L'extrémité avant du pion 82 est en forme de tête d'obus, traverse le perçage 76, s'étend entre la paroi d'appui 54 et la paroi transversale avant 74 de la doublure de la porte et est en regard de l'ouverture 56 de l'élément de renfort 40 quand la porte est fermée.

Compte tenu de la disposition de l'élément de renfort 40 par rapport à la porte, en cas de choc frontal comprimant le tronçon avant déformable 40 et transmettant en outre un effort résiduel au tronçon arrière 44, il y a rapprochement et contact de la paroi d'appui 54 et de la paroi transversale avant 74. Un effort est transmis à la porte qui participe à l'absorption de l'énergie du choc frontal, en plus du longeron de soubassement 20 et du montant de baie 16. En particulier, l'alignement de l'extrémité arrière de l'élément de renfort 40 par rapport au raidisseur 78 permet de transmettre l'effort résiduel de l'avant de la porte vers l'arrière de la porte via le raidisseur 78 pour que le pied milieu 18 du véhicule participe à l'absorption de l'énergie du choc frontal.

Lors du choc frontal, l'alignement du pion 82 avec l'ouverture 56 de la paroi d'appui 54 permet l'engagement du pion 82 dans l'ouverture 56, entraînant le maintien de la paroi d'appui 54 en regard de la partie avant de la porte et évitant que la branche principale arrière 50 de l'élément de renfort 40 soit déporté latéralement, un tel déport empêchant une transmission d'énergie par la porte.

Dans le mode de réalisation ci-dessus décrit, le raidisseur est rectiligne et sensiblement horizontal sur toute la longueur de la porte, en étant à l'extrémité supérieure du caisson, c'est-à-dire au niveau de l'extrémité inférieure de l'encadrement de vitre, mais dans des variantes de réalisation non représentées, le raidisseur est plus bas dans le caisson et/ou n'est pas sensiblement horizontal, par exemple orienté vers le bas. Dans ce cas, la branche principale du tronçon arrière peut être alignée avec le tronçon avant.

Quelle que soit la forme du tronçon arrière, il permet avantageusement par sa paroi transversale d'appui, de transmettre un effort vers l'arrière du véhicule via la porte qui est aménagée pour une telle transmission d'effort, pour absorption d'énergie du choc frontal.

La paroi transversale d'appui permettant cette transmission d'effort peut ne pas être seulement rattachée à la partie formant base de l'élément de renfort de section transversale en U. Par exemple dans un mode de réalisation particulier, elle est rattachée aux parois horizontales de l'élément de renfort de section transversale en U.

## Revendications

1. Caisse de véhicule automobile comportant :
- une porte latérale avant (22) pourvue d'un raidisseur (78) s'étendant sensiblement à mi hauteur de la porte (22) au moins dans une partie avant de la porte,
- un pied avant (14) dont une face arrière détermine l'avant d'un encadrement de la porte latérale avant (22),
- un élément de renfort avant (40) qui est fixé latéralement à l'avant de la caisse (10) et qui est pourvu d'un tronçon avant déformable (42) s'étendant selon la direction longitudinale (L) du véhicule entre une extrémité avant de la caisse (10) et le pied avant (14) et pouvant se déformer longitudinalement par compression suite à un choc frontal du véhicule, **caractérisée en ce que** :
- l'élément de renfort latéral (40) comporte un tronçon arrière (44) prolongeant le tronçon avant déformable (42), adapté à s'étendre latéralement au pied avant (14) et comportant à son extrémité arrière une paroi d'appui (54) qui s'étend transversalement à la direction longitudinale (L) de l'élément de renfort (40), qui est destinée à être interposée entre la face arrière du pied avant (14) et une partie avant de la porte (22) en étant alignée avec un raidisseur (78) de la porte (22) et qui peut venir en appui sur la partie avant de la porte (22),
- ladite paroi d'appui (54) de l'élément de renfort (40) comportant une ouverture (56) pouvant recevoir un pion (82) sensiblement longitudinal, solidaire du raidisseur (78) de la porte (22) et permettant de maintenir la paroi d'appui (54) en regard de la partie avant de la porte (22) lors du choc frontal,
et ce, de manière qu'en cas de choc frontal déformant longitudinalement par compression le tronçon avant (42) de l'élément de renfort (40), sa paroi d'appui (54) entre en contact avec la partie avant de la porte (22) au niveau du raidisseur (78) et transmette au raidisseur l'effort de compression déformant le tronçon avant déformable (42).

2. Caisse selon la revendication 1, **caractérisée en ce que** l'élément de renfort latéral (40) comporte un tronçon inférieur (58) qui est recourbé vers l'arrière et vers le bas à partir du raccordement du tronçon avant (42) et du tronçon arrière (44) de l'élément de renfort (40) et qui est apte à transmettre une partie de l'effort de compression déformant le tronçon avant déformable (42) vers un longeron de soubassement (20) du véhicule.

3. Caisse selon l'une quelconque des revendications précédentes, **caractérisé en ce que** l'élément de renfort latéral (40) comporte un tronçon supérieur (62) qui est recourbé vers l'arrière et vers le haut à partir du raccordement du tronçon avant (42) et du tronçon arrière (44) de l'élément de renfort et qui est apte à transmettre une partie de l'effort de compression déformant le tronçon avant déformable (44) vers un montant de baie (16) du véhicule.

4. Caisse selon l'une quelconque des revendications précédentes, **caractérisée en ce que** le raidisseur (78) comporte un pion (82) sensiblement longitudinal qui s'étend en saillie d'une paroi transversale d'extrémité (74) à l'avant de la porte (22), qui est adapté à être en regard d'une ouverture (56) de la paroi d'appui (54) d'un élément de renfort latéral (40) et qui peut s'engager dans ladite ouverture (56) en cas de déformation longitudinale par compression du tronçon avant (42) de l'élément de renfort (40) et maintenir latéralement la porte (22).

5. Caisse l'une quelconque des revendications précédentes, caractérisée le tronçon arrière de l'élément de renfort s'étend latéralement au pied avant vers l'extérieur de la caisse.

6. Caisse selon l'une quelconque des revendications précédentes, **caractérisée en ce que** le tronçon avant déformable (42) de l'élément de renfort (40) et le raidisseur (78) sont sensiblement horizontaux et **en ce que** le tronçon arrière (44) de l'élément de renfort (40) est sensiblement incliné d'avant en arrière et du bas vers le haut.

7. Véhicule automobile comportant une caisse (10) délimitant un habitacle et un compartiment avant, **caractérisé en ce que** la caisse (10) est conforme à l'une quelconque des revendications précédentes, le raidisseur (78) de la porte (22) et l'élément de renfort avant (40) s'étendant respectivement latéralement à l'habitacle et au moins pour partie latéralement au compartiment avant.

## Claims

1. Automobile body comprising:
- a front side door (22) provided with a stiffener (78) extending substantially at mid-height of the door (22) at least in a front portion of the door,
- a front pillar (14), a rear face of which determines the front of a frame of the front side door (22),
- a front reinforcement element (40) which is fixed laterally to the front of the body (10) and which is provided with a deformable front segment (42) extending along the longitudinal direction (L) of the vehicle between a front end of the body (10) and the front pillar (14) and being able to deform longitudinally by compression following a frontal impact of the vehicle,
**characterized in that**
- the lateral reinforcement element (40) comprises a rear segment (44) extending the deformable front segment (42), suited to extend laterally to the front pillar (14) and comprising at its rear end a support wall (54) which extends transversely to the longitudinal direction (L) of the reinforcement element (40), which is intended to be interposed between the rear face of the front pillar (14) and a front portion of the door (22), being aligned with a stiffener (78) of the door (22), and which can come to rest on the front portion of the door (22),
- the said support wall (54) of the reinforcement element (40) comprising an opening (56) able to receive a substantially longitudinal pin (82) integral with the stiffener (78) of the door (22) and allowing the support wall (54) to be held opposite the front portion of the door (22) on the frontal impact,
and this being such that in the case of frontal impact deforming longitudinally by compression the front segment (42) of the reinforcement element (40), its support wall (54) comes in contact with the front portion of the door (22) at the level of the stiffener (78) and transmits to the stiffener the compression force deforming the deformable front segment (42).

2. Body according to Claim 1, **characterized in that** the lateral reinforcement element (40) comprises a lower segment (58) which is curved towards the rear and downwards from the connection of the front segment (42) and of the rear segment (44) of the reinforcement element (40) and which is suited to transmit a portion of the compression force deforming the deformable front segment (42) towards a subframe side member (20) of the vehicle.

3. Body according to any one of the preceding claims, **characterized in that** the lateral reinforcement element (40) comprises an upper segment (62) which is curved towards the rear and upwards from the connection of the front segment (42) and of the rear segment (44) of the reinforcement element and which is suited to transmit a portion of the compression force deforming the deformable front segment (44) towards a pillar (16) of the vehicle.

4. Body according to any one of the preceding claims, **characterized in that** the stiffener (78) comprises a substantially longitudinal pin (82) which extends projecting from a transverse end wall (74) to the front of the door (22), which is adapted to be opposite an opening (56) of the support wall (54) of a lateral reinforcement element (40) and which can engage in the said opening (56) in the case of longitudinal deformation by compression of the front segment (42) of the reinforcement element (40) and hold the door (22) laterally.

5. Body according to any one of the preceding claims, **characterized in that** the rear segment of the reinforcement element extends laterally at the front pillar towards the exterior of the body.

6. Body according to any one of the preceding claims, **characterized in that** the deformable front segment (42) of the reinforcement element (40) and the stiffener (78) are substantially horizontal and **in that** the rear segment (44) of the reinforcement element (40) is substantially inclined from front to rear and from the bottom upwards.

7. Automobile comprising a body (10) delimiting a passenger compartment and a front compartment, **characterized in that** the body (10) is in accordance with any one of the preceding claims, the stiffener (78) of the door (22) and the front reinforcement element (40) extending respectively laterally to the passenger compartment and at least partially laterally to the front compartment.

## Patentansprüche

1. Kraftfahrzeugaufbau, umfassend:
- eine vordere Seitentür (22), die mit einem Versteifer (78) versehen ist, der sich im Wesentlichen auf halber Höhe der Tür (22) mindestens in einem vorderen Teil der Tür erstreckt,
- einen vorderen Fuß (14), dessen Rückseite die Vorderseite einer Einrahmung der vorderen Seitentür (22) festlegt,
- ein vorderes Verstärkungselement (40), das seitlich an der Vorderseite des Fahrzeugaufbaus (10) befestigt und mit einem verformbaren vorderen Abschnitt (42) versehen ist, der sich entlang der Längsrichtung (L) des Fahrzeugs zwischen einem vorderen Ende des Fahrzeugaufbaus (10) und dem vorderen Fuß (14) erstreckt und sich längs durch Komprimieren infolge eines Frontalaufpralls des Fahrzeugs verformen kann, **dadurch gekennzeichnet, dass**:
- das seitliche Verstärkungselement (40) einen hinteren Abschnitt (44) aufweist, der den verformbaren vorderen Abschnitt (42) verlängert, der dazu angepasst ist, sich seitlich zum vorderen Fuß (14) zu erstrecken und an seinem hinteren Ende eine Auflagewand (54) aufweist, die sich quer zu der Längsrichtung (L) des Verstärkungselements (40) erstreckt, das dazu bestimmt ist, zwischen der Rückseite des vorderen Fußes (14) und einem vorderen Teil der Tür (22) eingefügt zu werden und dabei mit einem Versteifer (78) der Tür (22) ausgerichtet zu sein, und das auf dem Vorderteil der Tür (22) zum Aufliegen kommen kann,
- wobei die Auflagewand (54) des Verstärkungselements (40) eine Öffnung (56) aufweist, die einen Stift (82), der im Wesentlichen längs ist, der fest mit dem Versteifer (78) der Tür (22) verbunden ist und es erlaubt, die Auflagewand (54) bei dem Frontalaufprall gegenüber dem Vorderteil der Tür (22) zu halten, aufnehmen kann,
und dies derart, dass bei einem Frontalaufprall, der den vorderen Abschnitt (42) des Verstärkungselements (40) durch Komprimieren längs verformt, seine Auflagewand (54) mit dem Vorderteil der Tür (22) auf dem Niveau des Versteifers (78) in Berührung tritt und auf den Versteifer die Kompressionskraft, die den verformbaren vorderen Abschnitt (42) verformt, überträgt.

2. Fahrzeugaufbau noch Anspruch 1, **dadurch gekennzeichnet, dass** das seitliche Verstärkungselement (40) einen unteren Abschnitt (58) aufweist, der ausgehend von dem Anschluss des vorderen Abschnitts (42) und des hinteren Abschnitts (44) des Verstärkungselements (40) nach hinten und nach unten gebogen ist und einen Teil der Kompressionskraft, die den verformbaren vorderen Abschnitt (42) verformt, zu einem Unterbaulängsträger (20) des Fahrzeugs übertragen kann.

3. Fahrzeugaufbau nach einem der vorhergehenden Ansprüche, **dadurch gekennzeichnet, dass** das seitliche Verstärkungselement (40) einen oberen Abschnitt (62) aufweist, der ausgehend von dem Anschluss des vorderen Abschnitts (42) und des hinteren Abschnitts (44) des Verstärkungselements nach hinten und nach oben gebogen ist und einen Teil der Kompressionskraft, die den verformbaren vorderen Abschnitt (44) verformt, zu einem Öffnungsständer (16) des Fahrzeugs übertragen kann.

4. Fahrzeugaufbau nach einem der vorhergehenden Ansprüche, **dadurch gekennzeichnet, dass** der Versteifer (78) einen im Wesentlichen längs ausgerichteten Stift (82) aufweist, der sich von einer Endquerwand (74) an der Vorderseite der Tür (22) vorstehend erstreckt, der sich gegenüber einer Öffnung (56) der Auflagewand (54) eines seitlichen Verstärkungselements (40) befinden kann und sich in die Öffnung (56) im Falle einer Längsverformung durch Komprimieren des vorderen Abschnitts (42) des Verstärkungselements (40) einfügen und die Tür (22) seitlich halten kann.

5. Fahrzeugaufbau nach einem der vorhergehenden Ansprüche, **dadurch gekennzeichnet, dass** sich der hintere Abschnitt des Verstärkungselements seitlich zu dem vorderen Fuß zur Außenseite des Fahrzeugaufbaus hin erstreckt.

6. Fahrzeugaufbau nach einem der vorhergehenden Ansprüche, **dadurch gekennzeichnet, dass** der verformbare vordere Abschnitt (42) des Verstärkungselements (40) und der Versteifer (78) im Wesentlichen horizontal sind, und dass der hintere Abschnitt (44) des Verstärkungselements (40) im Wesentlichen von vorn nach hinten und von unten nach oben geneigt ist.

7. Kraftfahrzeug, das einen Fahrzeugaufbau (10) aufweist, der eine Fahrgastzelle und einen vorderen Raum abgrenzt, **dadurch gekennzeichnet, dass** der Fahrzeugaufbau (10) einem der vorhergehenden Ansprüche entspricht, wobei sich der Versteifer (78) der Tür (22) und das vordere Verstärkungselement (40) jeweils seitlich zu der Fahrgastzelle und wenigstens zum Teil seitlich zu dem vorderen Raum erstrecken.
